# EUROPEAN PATENT SPECIFICATION

(11) **EP 1 577 977 B1**
(45) Date of publication and mention of the grant of the patent: **29.08.2007**
(21) Application number: 05251642.4
(22) Date of filing: 17.03.2005
(51) Int. Cl.: H01R 9/24, B60R 16/02

(54) **Electrical junction box**
Elektrischer Verbindungskasten
Boitier électrique de jonction

(30) Priority: 17.03.2004 JP 2004076551; 24.03.2004 JP 2004086722
(43) Date of publication of application: 21.09.2005
(73) Proprietor: Sumitomo Wiring Systems, Ltd., Yokkaichi-City, Mie, 510-8503 (JP)
(72) Inventor: Saito, Yukitaka c/o Sumitomo Wiring Systems, Ltd., Yokkaichi City, Mie, 510-8503 (JP); Isshiki, Yoshihiro c/o Sumitomo Wiring Syst. Ltd., Yokkaichi City, Mie, 510-8503 (JP); Yamasaki, Noriyuki c/o Sumitomo Wiring Syst. Ltd., Yokkaichi City, Mie, 510-8503 (JP); Sakai, Masao c/o Toyota Jidosha Kabushiki Kaisha, Toyota-shi, Aichi-ken, 471-8571 (JP); Kaneko Seiichi c/o Toyota Jidosha Kabushiki Kaisha, Toyota-shi, Aichi-ken, 471-8571 (JP)
(74) Representative: Paget, Hugh Charles Edward

(56) References cited:
- EP-A- 0 782 216
- EP-A- 1 245 454
- DE-A1- 3 928 751

## Description

### Field of the Invention

This invention relates to an electrical junction box, especially for a vehicle, and more particularly relates to an electrical junction box containing bus bars which constitute an internal circuit which can form a splice circuit to a connector. The invention also relates to a vehicle having such an electrical junction box mounted in it.

### Background Art

Heretofore, the present applicants have proposed an electrical junction box to be mounted on a motor vehicle in Japanese Laid-Open Patent Application No. 2000-92660 and US Patent 6220875, and as shown in Figure 10 of the present application. This box has a casing having an upper casing member 2 and a lower casing member 3. A lamination body in which flat bus bars 5A to 5D are laminated with insulation plates 4A to 4D alternately is disposed in the casing. Punching out a conductive metal plate along a circuit pattern forms the flat bus bars 4A to 4D. The flat bus bars constitute an internal circuit. Bending given portions of the flat bus bars 5A to 5D forms tabs 5a. The tabs 5a project into connector receiving sockets 6, relay receiving sockets 7, and fuse containing portions 8 provided on the upper casing member 2 and lower casing member 3.

The internal circuit is also composed of a material such as a single core wire, a single core wire to which an insulation displacement terminal is jointed, or a combination of a bus bar and a single core wire.

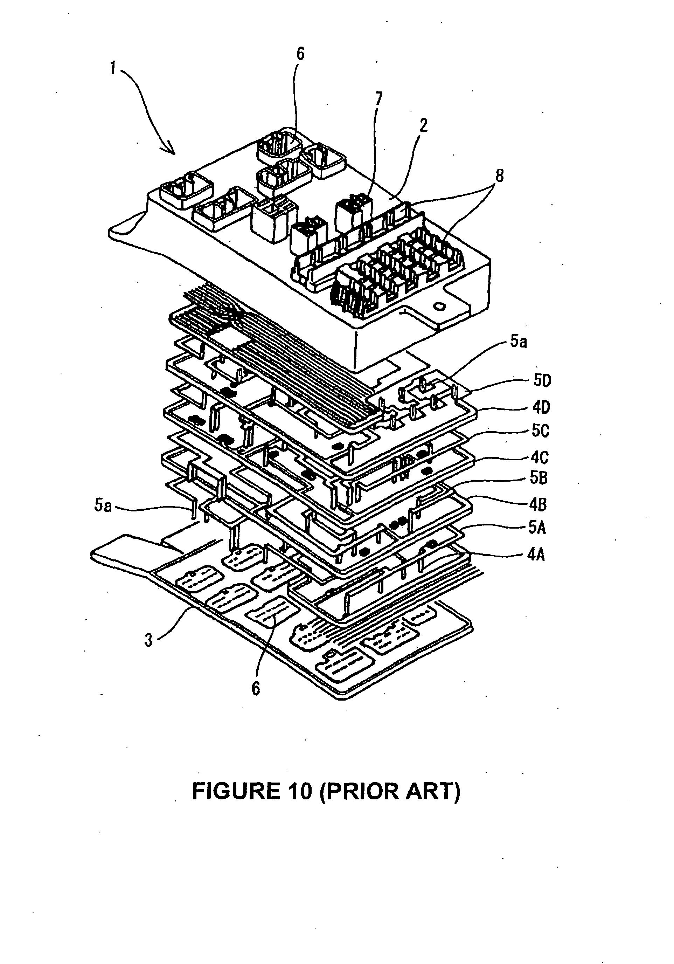

However, in the case of the electrical junction box 1 of Figure 10, or in the case where terminals in connectors to be received in the different connector receiving sockets 6 must be spliced to one another, or particularly in the case where terminals of the bus bars on different layers must be spliced to one another, an internal circuit is complicated and efficiency in arrangement of circuits is low. Consequently, there are problems that the number of lamination layers of the bus bars is increased, cost in production is increased, and the electrical junction box is of large size.

In the case where the internal circuit is composed of a single core wire or a combination of the single core wire and a bus bar, the same problems occur.

DE-A-3928751 shows an electrical connection box having flat bus bars arranged in a lower casing part. Portions of these bus bars are bent up vertically. On these vertical portions, there are terminals which have forked terminal portions engaging the bus bars and projecting tabs which extend into connector sockets in the upper housing part of the junction box.

EP-A-1245454 shows a junction box which has a name casing portion containing an array of vertical bus bars which extend alongside each other spaced apart. A second casing contains horizontal bus bars, which have downward tabs which project into the first casing to engage the vertical bus bars.

EP-A-0782216 discloses an electrical connection box containing a stack of horizontal bus bars alternating with insulating layers. Portions of the bus bars are bent downwardly, to project into connector sockets in the lower housing part of the box.

### Summary of the Invention

In view of the above problems, an object of the present invention is to provide an electrical junction box in which a splice circuit to a connector can be simply constructed and various branched connections can easily be formed, while making possible a small size of the box.

The present invention provides an electrical junction box as set out in claim 1.

The internal circuit of this electrical junction box includes the lateral or flat bus bars and vertical bus bars. These bus bars are joined to one another by pressure contacts. The connector housing sockets can be disposed intensively (at high density) on the exterior of the casing on the arrangement area for the vertical bus bars. The tabs to be fitted to the connectors are mainly tabs of the vertical bus bars. Accordingly, it is possible to reduce the number of connector connection tabs provided on the flat bus bars, which are joined to the vertical bus bar. Thus, a circuit pattern of the flat bus bars can be simplified, flexibility in design of circuits can be enhanced, and the number of lamination layers of the flat bus bars can be decreased.

Also, since the tabs can extend from opposite sides at the same positions on the vertical bus bars, the vertical bus bars can be connected to the connectors at a high density.

Preferably in this electrical junction box at least one of said second bus bars has a plurality of said tabs, spaced apart along the second bus bar and located at the upper side and/or the lower side thereof, which tabs extend respectively into different ones of said connector housing sockets, whereby a direct connection long side direction (width direction) of the tabs.

Thus, the long side direction of the connector housing sockets juxtaposed and in the longitudinal direction of the vertical bus bars is perpendicular to the long side direction of the tabs. Generally, the long side direction of terminal holes in a typical connector housing socket is positioned parallel to a long side direction of the connector housing socket while a long side direction of a connector joined to an end of an electrical cable and fitted in a connector housing socket accords with a long side direction of terminals in the connector. Consequently, the direction of the tab of the vertical bus bar is positioned perpendicular to the direction of the terminal of the connector to be fitted to the tab and the terminal cannot be fitted in a typical connector used conventionally. Accordingly, in the present invention, the tabs of the vertical bus bar may be bent at an angle of 90 degrees to be fitted in the typical conventional connector, thereby eliminating the need of a redesigned connector.

The flat first bus bars and insulation layers are laminated on one another alternately. An end of the each flat bus bar may be bent to form each of the forked terminal portion thereof, which connects to the vertical bus bar. The forked terminals may be covered with a protective insulation block. The block is provided with terminal containing-chambers for receiving the is made via the second bus bar between at least two of said external electrical connectors, in use. In this way the tabs coupled to the terminals in one or more of the connectors form a splice connection through the vertical bus bar.

Thus, in the case where a plurality of tabs extending from single vertical bus bar pass through a plurality of terminal holes in a single connector housing socket, the terminals in a single connector fitted in this socket can be spliced. Also, if the tabs pass through the terminal holes in different connector housing sockets juxtaposed in the longitudinal direction of the vertical bus bar, it is possible to form a splice circuit between different connectors.

Thus, since the plural tabs extending from the vertical bus bar are coupled to the connector or connectors, it is possible to make a splice connection simply. In comparison with a conventional internal circuit that has used only flat bus bars, the present invention can reduce the number of parts significantly and enhance flexibility in design of circuit patterns of flat bus bars.

The tabs provided on the vertical bus bar may however be bent at an angle of 90 degrees to pass through the terminal holes in the base wall of the connector housing socket. A long side direction of the rectangular connector housing socket then accords with a respective forked terminals and with terminal holes for insertion of terminal portions of the vertical bus bars. The terminal holes communicate with the terminal containing-chambers. The protective insulation block may be fixed on one of the insulation layers.

With this construction, since the protective insulation block covers the forked terminals of the flat bus bars, it is possible to prevent these terminals from being broken by external interference before they are coupled to the vertical bus bar. Also, since the vertical bus bar terminals are inserted into the terminal holes communicated with the terminal containing-chambers of the block to bring the vertical bus bars into press contact with the forked terminals, the forked terminals and vertical bus bars are smoothly brought into pressure contact with each other together, thereby preventing deformation and breakage of the respective terminals.

The forked terminals of the flat bus bars on different layers of the stacked assembly of the bus bars may be brought into pressure contact with a single vertical bus bar, so that the flat bus bars are joined to each other through the single vertical bus bar. With this construction, since the vertical bus bar can carry out a connection between layers of the flat bus bars, it is not necessary to use transfer terminals in order to carry out a connection between different layers of the flat bus bars. It is therefore possible to reduce the number of parts and to eliminate an assembling step, and it is also possible to enhance flexibility in design of circuits of the flat bus bars, thereby forming a circuit pattern efficiently and allowing reduction of the number of laminations of the flat bus bars.

A plurality of forked terminals may be provided on one of the flat bus bars, and these terminals are brought into press contact with a plurality of the vertical bus bars. The vertical bus bars are joined to one another through the flat bus bar. Thus, it is possible to utilize the flat bus bar for joining of the vertical bus bars and thus to obtain various splice connections between the connectors through the vertical bus bars.

Tabs may extend from the flat bus bars and pass through terminal holes in connector housing sockets, in fuse containing portions and relay containing portions on the first region for flat bus bars on the upper casing member and/or the lower casing member, to achieve connection to fuses, relays and connectors. In the invention, since the connector housing sockets can be disposed intensively on the second region for the vertical bus bars, there can be achieved a tolerance in positioning the fuse containing portions and relay containing portions in view of a relationship between the positions of the tabs of the flat bus bars. This can enhance flexibility in design of circuits of the flat bus bars.

It will be apparent from the foregoing that according to the present invention, since the vertical bus bars and flat bus bars constitute the internal circuit and many juxtaposed vertical bus bars can be brought into pressure contact with the flat bus bars, the vertical bus bars coupled to the connectors can be easily joined to the flat bus bars coupled to fuses or relays to form circuits.

Furthermore, since the tabs extending from the upper edge and/or the lower edge of the vertical bus bars are joined to the connectors, it is possible to intensively dispose the connector housing sockets on the second region for vertical bus bars. Thus, since it is not necessary to provide many tabs for connection to connectors on the flat bus bar, a circuit pattern of the flat bus bars will be simplified and thus the number of laminations of the flat bus bars will be reduced.

In particular, a plurality of tabs extend from the vertical bus bar in the longitudinal direction of the bus bar and these tabs are joined to the terminals of the connector. Thus, it is possible simply to form a splice circuit through the vertical bus bar in the same connector or between different connectors.

In this specification, the orientation words "upper", "lower", "upwards", "downwards", "vertical", "laterally", "sideways" etc. are used for convenience of description of the electrical junction box. In actual use, the box may be arranged in any suitable direction.

### Brief Description of the Drawings

Embodiments of the present invention will be described below by way of non-limitative example, referring to the drawings. In the drawings: -
Figure 1 is an exploded perspective view of a first embodiment of an electrical junction box in accordance with the present invention.
Figure 2 is a sectional view of the electrical junction box of Figure 1, in a vertical plane.
Figure 3A is a plan view of the electrical junction box of Figure 1, and Figure 3B is a bottom view of the electrical junction box of Figure 1.
Figures 4A and 4B are a plan view and a sectional view of a protection resin block of the box of Figure 1, illustrating tuning fork terminals of a flat bus bar and bus bar connection tabs of a vertical bus bar pressed into and secured in the protection resin block.
Figure 5 is a plan view of a connector to be fitted in a connector housing socket of the box of Figure 1.
Figure 6A is a front elevation view of a vertical bus bar used in a second embodiment of the electrical junction box in accordance with the present invention, and Figure 6B is a plan view of this vertical bus bar.
Figure 7 is an explanatory view, illustrating a relationship between tabs of the vertical bus bar and a connector housing socket.
Figure 8 is a sectional view of a part of a third embodiment of an electrical junction box in accordance with the present invention, illustrating that laminated flat bus bars are jointed to each other through the vertical bus bars.
Figure 9 is a plan view of a flat bus bar used for coupling vertical bus bars to one another in an embodiment of this invention.
Figure 10 is an exploded perspective view of a known electrical junction box described above.

### Detailed Description of the Preferred Embodiments

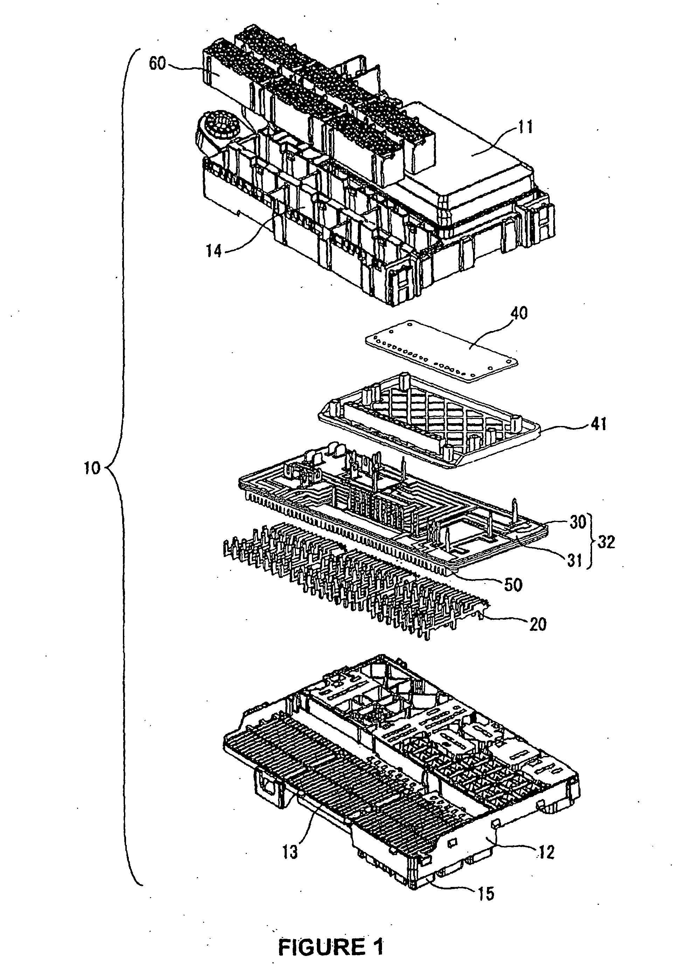

Figures 1 to 5 show a first embodiment of an electrical junction box in accordance with the present invention. The electrical junction box 10 has a casing including an upper casing member 11 and a lower casing member 12, both formed of molded plastics material. An internal circuit is accommodated in the casing. The internal circuit includes vertical bus bars 20, a lamination body 32 in which flat bus bars 30 and insulation plates 31 are laminated alternately, and a printed circuit board 40. The vertical bus bars 20 are so called because they each have a main base portion 23 which lies in a plane which extends upwardly and downwardly (vertically) relative to the upper and lower casing members 11, 12. The flat bus bars 30 are so called because they each have a main portion which lies in a plane which extends laterally or sideways (i.e. flat) relative to the upper and lower casing members 11, 12.

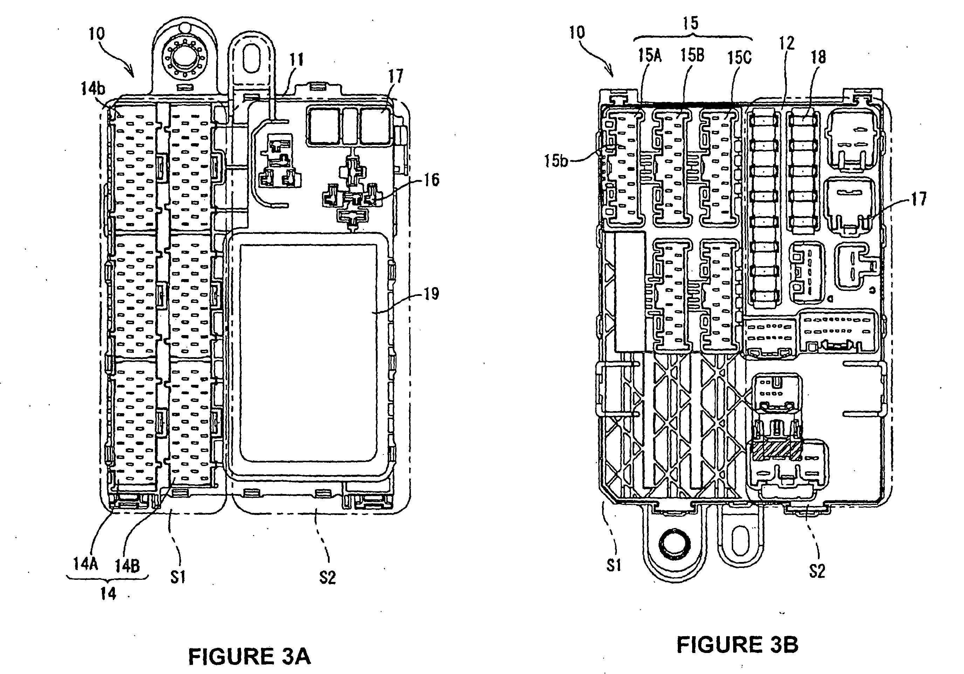

The electrical junction box 10 is divided laterally into a first half side which is an arrangement area S1 for the vertical bus bars 20 (the area enclosed by an alternate long and short dash line in Figures 3A and 3B) in which a plurality of the vertical bus bars 20 are juxtaposed and a second half side which is an arrangement area S2 for flat bus bars (an area enclosed by an alternate long and short two-dashes line in Figures 3A and 3B) in which the lamination body 32 including the flat bus bars 30 and insulation plates 31 are disposed.

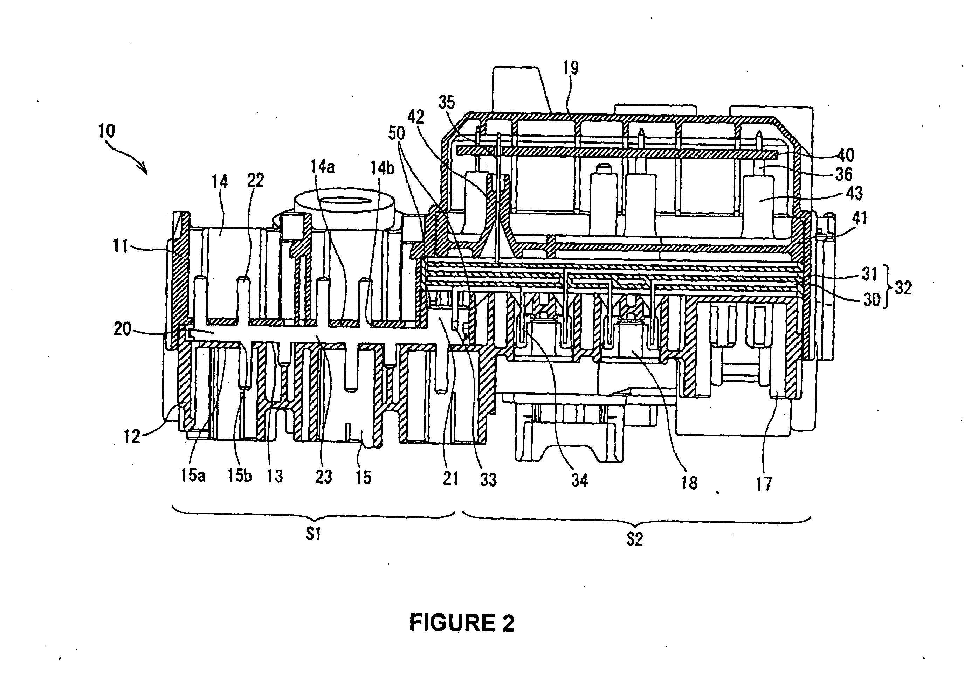

As shown in Figures 1 and 2, a plurality of parallel juxtaposed vertical bus bar containing-chambers 13 are provided in the arrangement area S1 for the vertical bus bars 20 in the lower casing member 12. The chambers 13 extend from the boundary between the arrangement area S1 and the arrangement area S2 to the other side of the arrangement area S1. A main base portion 23 of each vertical bus bar 20 is pushed into and thereby secured in the respective chamber 13.

The numerous vertical bus bars 20 are pushed into the chambers 13 with their first ends being aligned at the side of the arrangement area S2. Their second ends are at the opposite side of the area S1. As shown in Figure 2, at the first end of each bar 20 a bus bar connection tab 21 extends upward and makes a press contact with a tuning fork terminal 33 of at least one of the flat bus bars 30. A press contact here means a pressure contact in which electrical contact is maintained by pressure exerted by the contacting components.

On the other hand, each flat bus bar 30 is positioned in the arrangement area S2 and an end portion of the flat bus bar 30 is disposed at the boundary between the arrangement area S2 and the arrangement area S1. The tuning fork terminal 33 is bent downward from an end of the flat bus bar 30 to engage the bus bar connection tab 21 of the vertical bus bar 20. The terminal 33 is disposed perpendicularly to the connection tab 21 of the vertical bus bar 20. When the lamination body 32 is accommodated in the lower casing member 12, a given connection tab 21 is inserted into and secured in the slit in the terminal 33, as shown in Figure 2.

The tuning fork terminals 33 of the flat bus bars 30 are staggered laterally in the arrangement area S2 so that the vertical bus bars 20 can be arranged at a narrow pitch, i.e. close together.

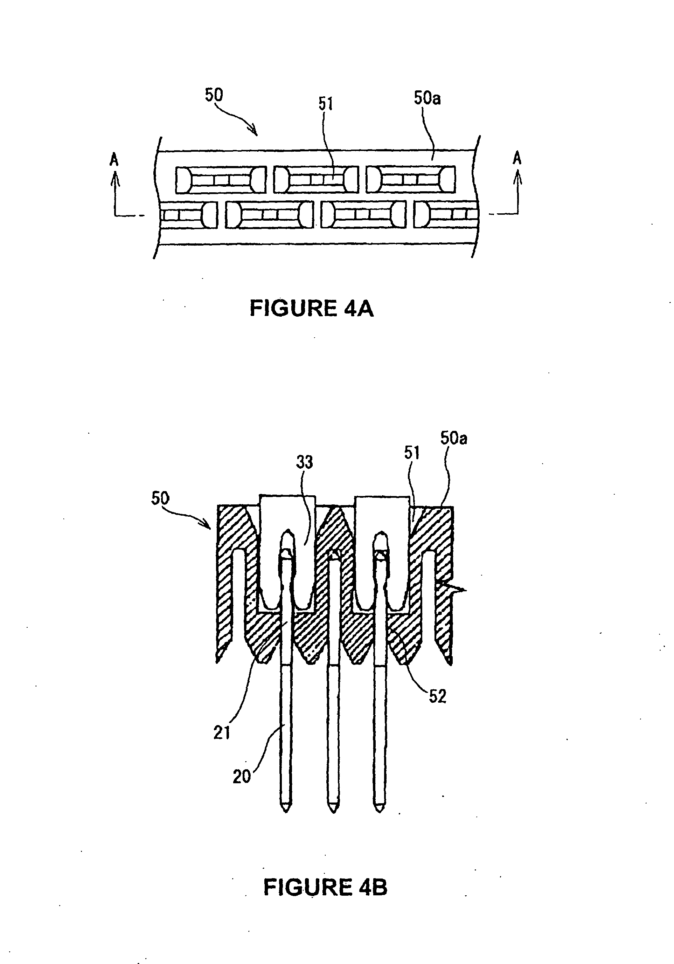

The tuning fork terminals 33 of the flat bus bars 30 are previously covered with a protection resin block 50 to protect them, before they are brought into press contact with the connection tabs 21 of the vertical bus bars 20. As shown in Figure 4A, the protection resin block 50 is provided with chambers 51 containing the terminals 33 and staggered in the same manner as the terminals 33. The connection tabs 21 of the vertical bus bars 20 are inserted into the chambers 51 through terminal holes 52 formed in the bottom walls of the chambers 51. The protection resin block 50 is fixed on the lower side of the lowermost insulation plate 31 (see Figure 1) and the tuning fork terminals 33 of the flat bus bars 30 are pushed downwards into the chambers 51.

The base portion 23 of each vertical bus bar 20 is disposed vertically in the electrical junction box. A plurality of tabs 22 extend upward or downward from one or both of the upper and lower edges of the base portion 23 and are spaced away from one another at their respective positions on the base portion 23. The tabs 22 extending upward from the base portions 23 project into the connector housing sockets 14 of the upper casing member 11 while the tabs extending downward from the base portion 23 project into the connector housing sockets 15 in the lower casing member 12.

The tabs 22 extending from the upper and lower edges of the base portion 23 of the vertical bus bar 20 are not bent with respect to the base portion 23 (i.e. they lie in the same plane as the base portion 23), so that the width direction of the tab 22 accords with the longitudinal direction of the vertical bus bar 20.

The tabs 22 project into plural connector housing sockets 14 and 15 (indicated by 14A, 14B and 15A, 15B, and 15C in Figure 3), which are juxtaposed in the longitudinal direction of the vertical bus bars 20. The connector housing sockets 14 and 15 have rectangular configurations, as seen in Figure 3. The long side direction of each of the connector housing sockets 14 and 15 is perpendicular to the width direction of each tab 22.

The tabs 22 extending from the same vertical bus bar 20 thus can project into the juxtaposed connector housing sockets 14A, 14B and 15A to 15C. As shown in Figures 2, 3A and 3B, the long side direction of each of slot-shaped terminal holes 14b and 15b formed in bottom walls 14a and 15a of the connector housing sockets 14 and 15 is perpendicular to the long side direction of each of the connector housing sockets 14 and 15 in correspondence with the direction of each of the tabs 22 that pass through the terminal holes 14b and 15b. The terminal holes 14b and 15b are staggered in the sockets 14A, 14B, so that the mating terminals of the connectors to be coupled to the tabs 22 may be arranged at a small pitch (close spacing.

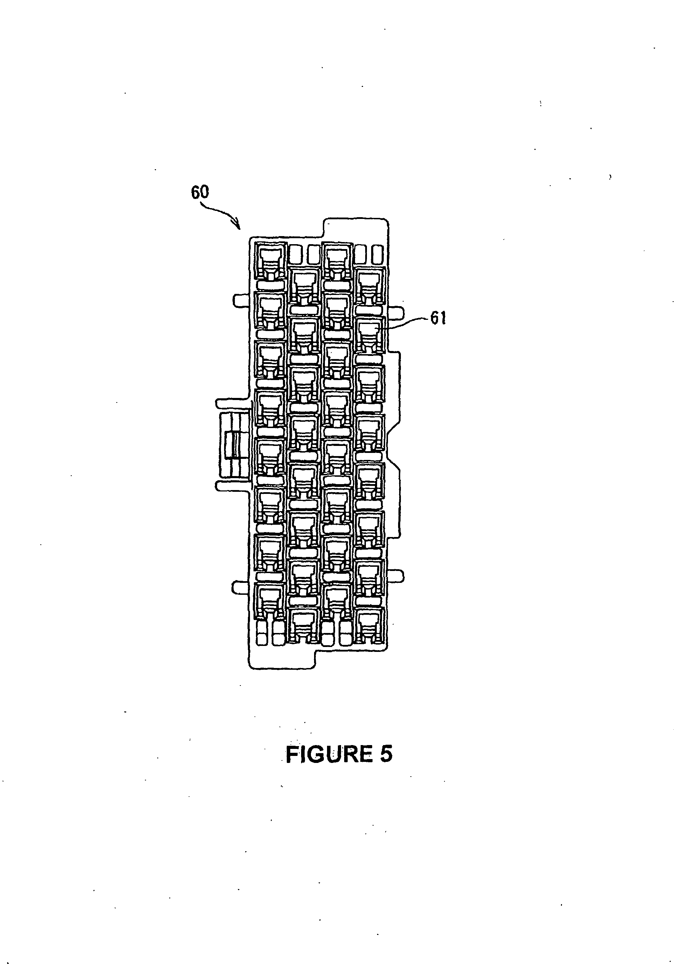

As shown in Figure 5, terminal containing-chambers 61 are provided by a staggered manner in rows in the connector 60 which is to be fitted into the connector housing socket 14. The terminal containing-chambers 61 houses electrical terminals (not shown) which engage the tabs 22 that project into the corresponding connector housing socket 14.

The terminals of the connector 60 are of a conventional type, formed by bending sheet metal, and have slots to engage the tabs 22 in a conventional manner. These terminals are joined to wires of for example a wiring harness of a motor vehicle. The terminal in the chamber 61 in the connector 60 is positioned with its slot in a direction corresponding to that of the tab 22 which projects into the socket 14 in the upper casing member 11.

Thus, as mentioned, the width direction of the tab 22 is perpendicular to the long side direction of the rectangular connector housing socket 14. However, the tab 22 extends from the base portion 23 of the vertical bus bar 20 as it is and is not bent at an angle of 90 degrees. The slot direction of the mating terminal in the chamber 61 of the connector 60 is also perpendicular to a long side direction of the connector housing socket 14.

Since the connector housing sockets 15 provided in the arrangement area S1 in the lower casing member 12 have the same structure as those in the upper casing member 11, their detailed explanation will be omitted here.

The plurality of tabs 22 of each bus bar 20 are spaced away from one another and extend into a plurality of the juxtaposed connector containing-sections 14A and 14B (15A, 15B, 15C) in the arrangement area S1. Accordingly, the connectors 60 may be spliced (electrically connected) through the vertical bus bars 20 in a simple manner.

On the other hand, terminal portions 34 are formed on each flat bus bar 30 by bending the given portions of the bus bar 30 upward or downward. The terminal portions 34 project for example into a relay housing socket 16 or a fuse housing socket 17 in the upper casing member 11, or they project for example into a connector housing socket 17 or a fuse housing socket 18 in the lower casing member 12 (see Figures 3A and 3B).

As shown in Figure 2, a printed board containing-section 19 is formed by a raised upper wall portion of the upper casing member 11, at a given position of the upper casing member 11. A printed board 40 (pcb) is accommodated in this section 19 with an insulation plate 41 interposed in the casing between the lamination body 32 and the printed board 40. Elongate conductor connection tabs 35 extend upward from at least one of the flat bus bars 30. The conductor connection tabs 35 pass through a raised connection tab support section 42 of the insulation plate 41 and the tabs 35 are connected to conductors of the printed board 40 disposed above in the section 19 by means of soldering. The printed board 40 is supported at a given height in the section 19 by means of soldering the printed board 40 to board securing-tabs 36 that extend from the flat bus bar 30 and pass through raised securing tab supports 43.

In the above-described construction, since the interior of the casing is divided into the arrangement area S1 for vertical bus bars and the arrangement area S2 for flat bus bars, and the internal circuit includes the vertical bus bars 20 and flat bus bars 30, there are achieved advantages that the external connectors 60 can be disposed intensively on the arrangement area S1 to be connected to the tabs 22 of the vertical bus bars 20, a circuit pattern of the flat bus bars 30 is simplified and flexibility in design of circuits is enhanced. Accordingly, it is possible to reduce the number of lamination layers of the lamination body 32 including the flat bus bars 30 and insulation plates 31, thereby lowering cost of production and reducing the size of the electrical junction box 10.

Since the protection resin block 50 covers the tuning fork terminals 33 of the flat bus bars 30, it is possible to prevent the tuning fork terminals 33 from being broken by external interference before the terminals 33 are coupled to the vertical bus bars 20. Also, since the bus bar connection tabs 21 coupled to the tuning fork terminals 33 are constrained at the regular insertion positions by the terminal holes 52 in the protection resin block 50, it is possible to prevent the bus bar connection tabs 21 and tuning fork terminals 33 from being deflected excessively by a pushing force exerted upon press contact between the tuning fork terminals 33 and the bus bar connection tabs 21. This permits size reduction of the tab 21, increasing the contact pressure.

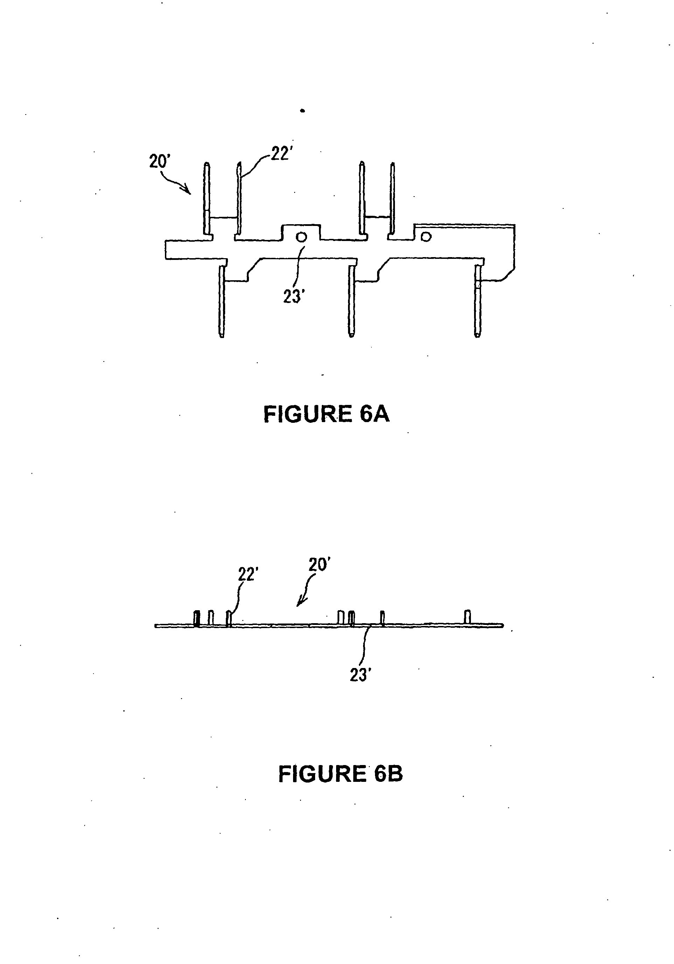

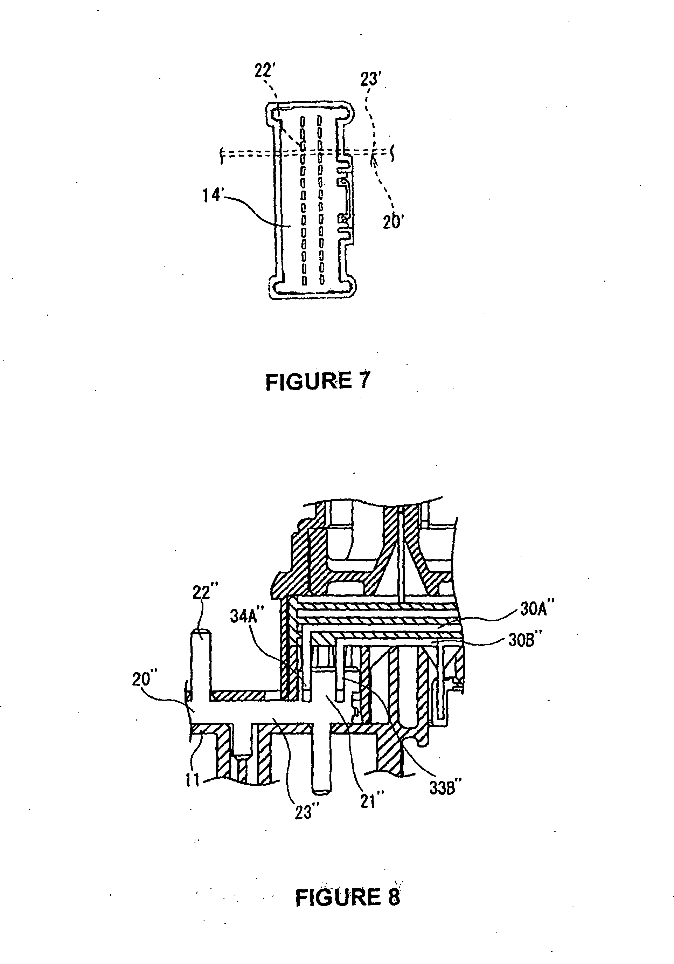

Figures 6A, 6B and 7 show a second embodiment of the present invention, which differs from the first embodiment in that tabs extend from vertical bus bars in a direction different from that in the first embodiment. The tabs 22' extending from the base portion 23' of the vertical bus bar 20' are bent at an angle of 90 degrees near the edge of the base portion 23' so that the width direction of the tab 22' accords with the long side direction of a connector housing socket 14'.

With the construction of Figures 6A, 6B and 7, it is possible to couple the tabs 22' of the vertical bus bars 20' to the terminals in an external conventional connector whose long side direction accords with the length direction of a terminal slot.

Since the other structures and operational effects in the second embodiment are the same as those in the first embodiment, their explanation will be omitted.

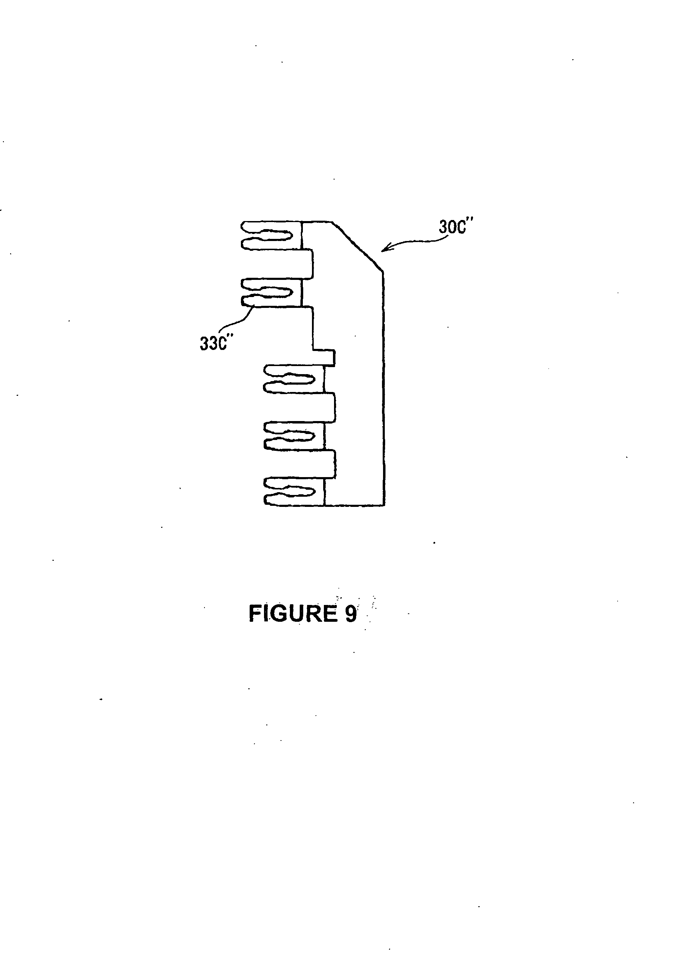

Figures 8 and 9 show a third embodiment of the present invention, in which a vertical bus bar 20" is used as a transfer bus bar for intermediate layer connection of flat bus bars. Also a flat bus bar 30" is used as a transfer bus bar for coupling the vertical bus bars 20" to each other. These features may be added to the construction of the first embodiment.

Figure 8 shows that tuning fork terminals 34A" and 33B" formed by bending flat bus bars 30A" and 30B" of different layers are disposed at the opposed positions in a lateral direction. These opposed tuning fork terminals 34A" and 33B" are brought into press contact with bus bar connection tab 21" of the same vertical bus bar 20". Thus, the flat bus bars 33A" and 33B" of the different layers are connected through the vertical bus bar 20".

Also, as shown in Figure 9, only the tuning fork terminals 33C" extend from a base portion of one flat bus bar 30C". The tuning fork terminals 33C" are brought into press contact with the bus bar connection tabs 21" of several of the vertical bus bars 20". Thus, the different vertical bus bars 20" are coupled to one another through the single flat bus bar 30C".

Although the flat bus bar 30C" is provided with only the tuning fork terminals 33C" in this third embodiment, a terminal portion to be coupled to a terminal of a connector or other component may be provided additionally on the flat bus bar 30C".

With the constructions of Figures 8 and 9, it is possible to efficiently arrange the bus bars by using either the vertical bus bar 20" or the flat bus bar 30" as a transfer bus bar and by connecting the other bus bars to each other between the layers.

Since the other structures and operational effects in the second embodiment are the same as those in the first embodiment, their explanation will be omitted. The same reference numerals are used for corresponding elements in the several embodiments.

## Claims

1. An electrical junction box (10) having:
a casing comprising upper and lower casing members (11, 12) coupled together and defining a plurality of compartments located within the casing between said upper and lower casing members (11, 12), said casing having a plurality of connector housing sockets (14, 15) which, in use, receive external electrical connectors,
a plurality of first bus bars (30) each having a main portion which extends in a lateral plane relative to said casing, said first bus bars (30) being arranged in a lamination body (32) laminated alternately with insulation plates (31) in a first region (S2) of said casing,
a plurality of second bus bars (20) each having a main portion (23) which extends in a vertical plane relative to said casing, said second bus bars (20) being arranged in a plurality of said compartments (13) of said casing which are juxtaposed in a second region (S1) of said casing, said second region being located alongside of said first region (S2), and extending laterally away from one side of said first region, said main portions (23) of said second bus bars (20) having first ends located at the side of said first region (S2) and said main portions (23) extending alongside each in their respective vertical planes from said first ends across said second region away from said first region (51),
said first and second bus bars (20, 30) having interconnecting terminal portions (21, 33) by which respective first bus bars make electrical connections with respective second bus bars at the zone where said first and second regions join, each said electrical connection between the first and second bus bars comprising a forked terminal portion (33) of one bus bar and a projecting terminal portion (21) of the other bus bar, the forked terminal portion (33) making pressure contact with the projecting terminal portion (21),
said second bus bars (20) having tabs (22) which project into said connector housing sockets (14, 15) in order to make electrical connection to terminals of said external electrical connectors, in use.

2. An electrical junction box according to claim 1, wherein at least one of said second bus bars (20) has a plurality of said tabs (22), spaced apart along the second bus bar and located at the upper side and/or the lower side thereof, which tabs (22) extend respectively into different ones of said connector housing sockets (14, 15), whereby a direct connection is made via the second bus bar between at least two of said external electrical connectors, in use.

3. An electrical junction box according to claim 1 or 2, wherein said tabs (22') of said second bus bars (20') are bent through 90°, relative to said main portions of said second bus bars, to project into said connector housing sockets (14, 15), said connector housing sockets (14, 15) being elongate and having their elongate direction aligned with the width direction of said tabs (22') of said second bus bars (20') which are bent through 90°.

4. An electrical junction box according to any one of claims 1 to 3, wherein end portions of said first bus bars (30) are bent to form said terminal portions (33) of said electrical connections.

5. An electrical junction box according to claim 4, wherein said terminal portions (33) of a plurality of said first bus bars (30), stacked one above another, make electrical connections to the same one of said second bus bars (20) whereby said first bus bars (30) are electrically connected together via the second bus bar (20).

6. An electrical junction box according to any one of claims 1 to 5, having a protective insulation block (50) in which said electrical connections between first and second bus bars (20, 30) are housed, said protective insulation block (50) having chambers (51) which receive said forked terminal portions (33) and terminal holes (52) which communicate with said chambers and receive said projecting terminal portions (21).

7. An electrical junction box according to any one of claims 1 to 6, wherein one of said first bus bars (30) makes electrical connection to a plurality of said second bus bars (20) which are thereby electrically connected together via the first bus bar (30).

8. An electrical junction box according to any one of claims 1 to 7, wherein said forked terminal portions (33) are provided by said first bus bars (30).

9. A vehicle having an electrical junction box according to any one of claims 1 to 8 mounted therein.

## Patentansprüche

1. Elektrischer Anschlusskasten bzw. Verteilerdose (10), aufweisend:
eine Umhausung bzw. Hülle, die obere und untere Umhausungsteile (11, 12) aufweist, die miteinander gekoppelt sind und eine Mehrzahl von Fächern festlegen bzw. abgrenzen bzw. definieren, die sich im Inneren der Umhausung zwischen den oberen und unteren Umhausungsteilen (11, 12) befinden, wobei die Umhausung eine Mehrzahl von Verbindergehäusefassungen (14, 15) aufweist, die bei Verwendung externe elektrische Verbinder aufnehmen,
eine Mehrzahl von ersten Sammelschienen bzw. Busschienen bzw. Verteilerschienen (30), von denen jede einen Hauptabschnitt aufweist, der sich in einer seitlichen bzw. lateralen Ebene relativ zu der Umhausung erstreckt, wobei die ersten Sammelschienen (30) in einem Laminierungskörper (32) angeordnet sind, der abwechselnd mit Isolierungsplatten (31) in einem ersten Bereich bzw. in einer ersten Region (S2) der Umhausung laminiert ist,
eine Mehrzahl von zweiten Sammelschienen bzw. Busschienen bzw. Verteilerschienen (20), von denen jede einen Hauptabschnitt (23) aufweist, der sich in einer vertikalen Ebene relativ zu der Umhausung erstreckt, wobei die zweiten Sammelschienen (20) in einer Mehrzahl der Fächer (13) der Umhausung angeordnet sind, die in einem zweiten Bereich bzw. Abschnitt (S1) der Umhausung nebeneinander bzw. benachbart sind, wobei sich der zweite Bereich längsseits des ersten Bereiches (S2) befindet und seitlich bzw. lateral von einer Seite des ersten Bereiches weg erstreckt, wobei die Hauptabschnitte (23) der zweiten Sammelschienen (20) erste Enden aufweisen, die sich an der Seite des ersten Bereiches (S2) befinden, und sich die Hauptabschnitte (23) jeweils längsseits in ihren jeweiligen vertikalen Ebenen von den ersten Enden durch bzw. quer bzw. über den zweiten Bereich weg von dem ersten Bereich (S1) erstrecken,
wobei die ersten und zweiten Sammelschienen (20, 30) miteinander verbindende bzw. durchsaltende Anschlussabschnitte (21, 33) aufweisen, durch die jeweilige erste Sammelschienen elektrische Verbindungen mit jeweiligen zweiten Sammelschienen in bzw. an derjenigen Zone herstellen bzw. machen, wo sich die ersten und zweiten Bereiche verbinden, wobei jede elektrische Verbindung zwischen den ersten und zweiten Sammelschienen einen gegabelten Anschlussabschnitt (33) einer Sammelschiene und einen vorstehenden Anschlussabschnitt (21) der anderen Sammelschiene umfasst, wobei der gegabelte Anschlussabschnitt (33) Druckkontakt mit dem vorstehenden Anschlussabschnitt (21) macht bzw. herstellt,
wobei die zweiten Sammelschienen (20) Fortsätze bzw. Nasen (22) aufweisen, die in die Verbindergehäusefassungen (14, 15) hinein vorstehen, um bei Verwendung elektrische Verbindung mit Anschlüssen der externen elektrischen Verbinder herzustellen.

2. Elektrischer Anschlusskasten nach Anspruch 1, bei wenigstens eine der zweiten Sammelschienen (20) die Mehrzahl der Fortsätze (22) aufweist, die entlang der zweiten Sammelschiene beabstandet sind und sich an der Oberseite und/oder der Unterseite hiervon befinden, wobei sich die Fortsätze (22) jeweils in verschiedene der Verbindergehäusefassungen (14, 15) hinein erstrecken, sodass bei Verwendung eine direkte Verbindung über die zweite Sammelschiene zwischen wenigstens zwei der externen elektrischen Verbinder hergestellt wird.

3. Elektrischer Anschlusskasten nach Anspruch 1 oder 2, bei dem die Fortsätze (22') der zweiten Sammelschienen (20') relativ zu den Hauptabschnitten der zweiten Sammelschienen um 90° gebogen sind, um in die Verbindergehäusefassungen (14, 15) hinein vorzustehen, wobei die Verbindergehäusefassungen (14, 15) länglich sind und deren Längsrichtung mit der Breitenrichtung der Fortsätze (22') der zweiten Sammelschienen (20'), welche um 90° gebogen sind, ausgerichtet bzw. angepasst sind.

4. Elektrischer Anschlusskasten nach einem der Ansprüche 1 bis 3, bei dem Endabschnitte der ersten Sammelschienen (30) gebogen sind, um die Anschlussabschnitte (33) der elektrischen Verbindungen zu bilden.

5. Elektrischer Anschlusskasten nach Anspruch 4, bei dem die Anschlussabschnitte (33) einer Mehrzahl der ersten Sammelschienen (30) in Übereinanderstapelung elektrische Verbindungen mit derselben der zweiten Sammelschienen (20) herstellen, sodass die ersten Sammelschienen (30) über die zweite Sammelschiene (20) elektrisch miteinander verbunden sind.

6. Elektrischer Anschlusskasten nach einem der Ansprüche 1 bis 5, der einen Schutzisolierungsblock (50) aufweist, in dem die elektrischen Verbindungen zwischen ersten und zweiten Sammelschienen (20, 30) untergebracht sind, wobei der Schutzisolierungsblock (50) Kammern (51) zur Aufnahme der gegabelten Anschlussabschnitte (33) und Anschlusslöcher (52) aufweist, welche mit den Kammern kommunizieren bzw. in Verbindung sind und die vorstehenden Anschlussabschnitte (21) aufnehmen.

7. Elektrischer Anschlusskasten nach einem der Ansprüche 1 bis 6, bei dem eine der ersten Sammelschienen (30) eine elektrische Verbindung mit einer Mehrzahl der zweiten Sammelschienen (20) herstellt bzw. macht, die hierdurch über die erste Sammelschiene (30) elektrisch miteinander verbunden sind.

8. Elektrischer Anschlusskasten nach einem der Ansprüche 1 bis 7, bei dem die gegabelten Anschlussabschnitte (33) durch die ersten Sammelschienen (30) bereitgestellt sind.

9. Fahrzeug mit einem darin eingebauten bzw. montierten bzw. angeordneten elektrischen Anschlusskasten nach einem der Ansprüche 1 bis 8.

## Revendications

1. Boîtier électrique de jonction (10) comprenant :
un corps comprenant des éléments de corps supérieur et inférieur (11, 12) reliés l'un à l'autre et définissant une pluralité de compartiments situés à l'intérieur du corps entre les dits éléments de corps supérieur et inférieur (11, 12), le dit corps ayant une pluralité de douilles de boîtier de connecteur (14, 15) qui reçoivent, en utilisation, des connecteurs électriques extérieurs,
une pluralité de premières barres de distribution (30) ayant chacune une partie principale qui s'étend dans un plan latéral par rapport au dit corps, les dites premières barres de distribution (30) étant agencées en une plaque multicouche (32) dans laquelle elle sont superposées en alternance avec des plaques isolantes (31) dans une première région (S2) du dit corps,
une pluralité de deuxièmes barres de distribution (20) ayant chacune une partie principale (23) qui s'étend dans un plan vertical par rapport au dit corps, les dites deuxièmes barres de distribution (20) étant agencées dans une pluralité des dits compartiments (13) du dit corps qui sont juxtaposés dans une deuxième région (S1) du dit corps, la dite deuxième région étant située le long de la dite première région (S2) et s'étendant latéralement à l'opposé d'un côté de la dite première région, les dites parties principales (23) des dites deuxièmes barres de distribution (20) ayant des premières extrémités situées du côté de la dite première région (S2) et les dites parties principales (23) s'étendant les unes le long des autres dans leurs plans verticaux respectifs à partir des dites premières extrémités, à travers la dite deuxième région, à l'opposé de la dite première région (S1),
les dites première et deuxième barres de distribution (20, 30) ayant des parties terminales d'interconnexion (21, 33) par lesquelles des premières barres de distribution respectives forment des connexions électriques avec des deuxièmes barres de distribution respectives dans la zone où les dites première et deuxième régions se rejoignent, chaque dite connexion électrique entre les premières et deuxièmes barres de distribution comprenant une partie terminale fourchue (33) d'une barre de distribution et une partie terminale en saillie (21) de l'autre barre de distribution, la partie terminale fourchue (33) exerçant un contact de pression avec la partie terminale en saillie (21), les dites deuxièmes barres de distribution (20) ayant des broches (22) qui font saillie dans les dites douilles de boîtier de connecteur (14, 15) afin de venir en connexion électrique avec les bornes des dits connecteurs électriques extérieurs, en utilisation.

2. Boîtier de jonction électrique selon la revendication 1, dans lequel au moins une des dites deuxièmes barres de distribution (20) comporte une pluralité de dites broches (22), espacées les unes des autres le long de la deuxième barre de distribution et placées sur son côté supérieur et/ou son côté inférieur, les dites broches (22) s'étendant respectivement dans différentes douilles des dites douilles de boîtier de connecteur (14, 15) de sorte qu'une connexion directe est effectuée via la deuxième barre de distribution entre au moins deux des dits connecteurs électriques extérieurs, en utilisation

3. Boîtier de jonction électrique selon la revendication 1 ou 2, dans lequel les dites broches (22') des dites deuxièmes barres de distribution (20') sont pliées à 90°, par rapport aux dites parties principales des dites deuxièmes barres de distribution, de manière à faire saillie dans les dites douilles de boîtier de connecteur (14, 15), les dites douilles de boîtier de connecteur (14, 15) étant allongées et ayant leur direction allongée alignée avec la direction de largeur des dites broches (22') des dites deuxièmes barres de distribution (20') qui sont pliées à 90°.

4. Boîtier de jonction électrique selon une quelconque des revendications 1 à 3, dans lequel les portions d'extrémité des dites premières barres de distribution (30) sont pliées pour former les dites parties terminales (33) des dites connexions électriques.

5. Boîtier de jonction électrique selon la revendication 4, dans lequel les dites parties terminales (33) d'une pluralité de dites premières barres de distribution (30), mutuellement superposées, forment des connexions électriques avec la même des dites deuxièmes barres de distribution (20), de sorte que les dites premières barres de distribution (30) sont électriquement connectées ensemble via la deuxième barre de distribution (20).

6. Boîtier de jonction électrique selon une quelconque des revendications 1 à 5, ayant un bloc isolant de protection (50) dans lequel les dites connexions électriques entre les premières et les deuxièmes barres de distribution (20, 30) sont logées, le dit bloc isolant de protection (50) ayant des chambres (51) qui reçoivent les dites parties terminales fourchues (33), et des trous de borne (52) qui communiquent avec les dites chambres et reçoivent les dites parties terminales en saillie (21).

7. Boîtier de jonction électrique selon une quelconque des revendications 1 à 6, dans lequel une des dites premières barres de distribution (30) forme une connexion électrique avec une pluralité de dites deuxièmes barres de distribution (20) qui sont ainsi électriquement connectées ensemble via la première barre de distribution (30).

8. Boîtier de jonction électrique selon une quelconque des revendications 1 à 7, dans lequel les dites parties terminales fourchues (33) sont constituées par les dites premières barres de distribution (30).

9. Véhicule ayant un boîtier de jonction électrique selon une quelconque des revendications 1 à 8, monté à l'intérieur du véhicule.
